# EUROPÄISCHE PATENTSCHRIFT

(11) **EP 0 588 140 B1**
(45) Veröffentlichungstag und Bekanntmachung des Hinweises auf die Patenterteilung: **23.10.2002**
(21) Anmeldenummer: 93113824.2
(22) Anmeldetag: 30.08.1993
(51) Int. Cl.: H04L 12/18, H04L 12/56

(54) **Verfahren zum Rundsenden von Zellen in einer im Asynchron-Transfer-Modus wirkenden Koppelstruktur eines Kommunikationssystems**
Method for cell broadcasting in ATM switching system
Procédé pour diffuser des cellules dans un commutateur à ATM

(30) Priorität: 14.09.1992 DE 4230743
(43) Veröffentlichungstag der Anmeldung: 23.03.1994
(73) Patentinhaber: SIEMENS AKTIENGESELLSCHAFT, 80333 München (DE)
(72) Erfinder: Hummel, Heinrich, Dipl.-Math., D-85232 Bergkirchen (DE)

(56) Entgegenhaltungen:
- EP-A- 0 446 540
- INTERNATIONAL CONFERENCE ON COMMUNICATIONS (ICC 91) - RISING TO THE HEIGHTS, DENVER, JUNE 23 - 26, 1991, Bd. 3 OF 3, 23.Juni 1991, INSTITUTE OF ELECTRICAL AND ELECTRONICS ENGINEERS, Seiten 1575-1581, XP000277582 SCHRODI K J ET AL: "DYNAMIC CONNECTION REARRANGEMENTS IN ATM SWITCHING NETWORKS"
- IEEE INFOCOM '88, NEW ORLEANS, MARCH 27 - 31, 1988, Nr. 1988, 27.März 1988, INSTITUTE OF ELECTRICAL AND ELECTRONICS ENGINEERS, Seiten 29-34, XP000010851 ENG K Y ET AL: "MULTICAST AND BROADCAST SERVICES IN A KNOCKOUT PACKET SWITCH"

## Beschreibung

Für zukünftige Kommunikationssysteme, insbesondere Breitbandnetze, sind gemäß einem Asynchron-Transfer-Modus wirkende Koppelstrukturen bzw. Koppeleinrichtungen vorgesehen. Bei diesem Asynchron-Transfer-Modus werden auf jedem Ubertragungsabschnitt ununterbrochen Pakete fester Länge übertragen, die in der Fachwelt als Zellen bezeichnet werden. Diese Zellen bestehen aus 48 Oktets für die Nutzinformation und 5 Oktets Zellenroutinginformationen für den Zellkopf. Ist gerade keine Nutzinformation zu senden, werden speziell markierte Leerzeichen gesendet.

Eine gemäß dem Asynchron-Transfer-Modus wirkende Koppeleinrichtung ist ähnlich der Koppeleinrichtung herkömmlicher digitaler Kommunikationssysteme in ein oder mehrere Koppelstufen strukturiert, wobei die einzelnen Koppelstufen untereinander derart vermascht sind, daß eine weitgehend blockierungsfreie Koppelstruktur entsteht. Die Eingangsund Ausgangsleitungen einer derartigen Koppelstruktur werden aus den im Zellkopf der Zelle angegebenen Zellenroutinginformationen, d.h. aus virtuellen Wegeinformationen und virtuellen Kanalinformationen ermittelt. Diese vermittlungstechnischen Informationen sind aus den von den Teilnehmern eines Kommunikationssystems signalisierten Rundsende- und Zielinformationen - d.h. Rufnummern der Zielteilnehmer - abgeleitet.

Aus der Druckschrift "ATM-Technologie für zukünftige Breitbandnetze" der Fa. Siemens, Zeile 17, rechte Spalte, ist bekannt, für die Vermittlung einer Zelle durch eine Koppelstruktur zusätzlich Routinginformationen aus den im im Zellkopf der Zelle angegebenen Zellroutinginformationen zu ermitteln und an die Zelle anzufügen. Mit Hilfe dieser internen Routinginformation sucht sich die jeweilige Zelle den festgelegten Pfad durch eine n-stufige Koppelstruktur selbststeuernd, d.h. ohne Mitwirkung einer zentralen Kommunikationssystemsteuerung. Die zusätzlichen internen Routinginformationen werden in einen kommunikationssysteminternen Zellkopf eingefügt und vor die jeweilige Zelle gesetzt. Nach der Selbstvermittlung der Zelle durch die Koppelstruktur wird der kommunikationssysteminterne Zellkopf wieder entfernt.

Der Datenumfang der Zellroutinginformationen bzw. des Kommunikationssysteminternen Zellkopfes wird im Wesentlichen durch die Anzahl der Koppelstufen bestimmt, wobei üblicherweise für eine Koppelstufe ein Informationsstring, z.B. ein Byte, vorgesehen ist, die zu einem Block zusammengestellt werden. In zunehmendem Maße werden kommunikationssysteminterne Zellköpfe definiert, die eine vorgegebene, auf die maximale Anzahl von Koppelstufen abgestimmte Anzahl von Informationsstrings, z.B. für fünf Koppelstufen fünf Bitoktets bzw. Bytes, aufweisen.

Bei derartig strukturierten kommunikationssysteminternen Zellköpfen kann im Falle des Rundsendens von Zellen an mehrere Ausgangsleitungen der Koppelstruktur das Selbststeuerungsprinzip der Zellen nicht ohne weiteres aufrechterhalten werden.

Aus dem Konferenzbericht "Dynamic Connection Rearrangements in ATM Switching Networks" von K.J. Schrodi et al., Band 3, Seiten 1575 bis 1581, der International Conference on Communications vom 23. bis 26. Juni 1991 ist ein Verfahren zum Rundsenden von Zellen in einem ATM-Kommunikationssystem bekannt. Hierbei wird vorgeschlagen, für jeden möglichen Verzweigungspunkt einer Punkt-zu-Mehrpunkt-Verbindung innerhalb einer Koppelstufe eine Matrix vorzusehen, deren Zeilen jeweils einem vorgegebenen Verbindungsbaum und deren Spalten jeweils einer Ausgangsleitung der Koppelstufe zugeordnet sind. Die einzelnen Matrixelemente enthalten dabei jeweils eine Information, die angibt, ob eine ATM-Zelle, die gemäß einem der betreffenden Matrixzeile zugeordneten Verbindungsbaum zu übermitteln ist, über die der betreffenden Matrixspalte zugeordnete Ausgangsleitung weiterzuleiten ist oder nicht. Die Zeilen dieser Matrix, und damit die möglichen Verbindungsbäume, werden hierbei durch in allen Koppelstufen eines Koppelnetzwerks einheitliche Bezeichner identifiziert. Diese Einheitlichkeit bedingt allerdings, dass die Anzahl der unterschiedlichen, in einem Koppelnetzwerk möglichen Verbindungsbäume aufgrund der erforderlichen, koppelnetzweiten Reservierung der Bezeichner sehr begrenzt ist.

Die der Erfindung zugrunde liegende Aufgabe besteht darin, rundzusendende Zellen durch eine n-stufige Koppelstruktur unter weitgehendster Beibehaltung des Selbststeuerungsprinzips und der bisher verwendeten Zellköpfe zu vermitteln. Die Aufgabe wird durch die Merkmale des Anspruchs 1 gelöst.

Der wesentliche Aspekt des erfindungsgemäßen Verfahrens ist darin zu sehen, daß jedem der eine Koppelstufe bildenden Koppelelemente eine Rundsendematrix zugeordnet ist, in der die in jeweils einer eine Rundsendeverbindung repräsentierenden Zeile eingetragenen, koppelelementeindividuellen Routinginformationen die Vermittlungspfade einer rundzusendenden Zelle in dem jeweiligen Koppelelement angeben. Hierbei ist jeder Spalte der Rundsendeinformation eine Ausgangsleitung des jeweiligen Koppelelementes zugeordnet. Vor dem Weiterleiten einer Zelle an die Koppelstruktur wird bei rundzusendenden Zellen anstelle der internen Routinginformationen eine Rundsendeinformation und eine Zeilenindexinformation in den kommunikationssysteminternen Zellkopf eingefügt. Nach dem Empfang einer rundzusendenden Zelle in einem Koppelelement wird anhand der angegebenen Zeileninformation die relevante Zeile in der zugeordneten Rundsendematrix ermittelt und in Abhängigkeit von der in dieser Zeile angegebenen koppelelementeindividuellen Routinginformationen die rundzusendende Zelle an die zugeordneten Ausgangsleitungen der Koppelelemente vermittelt. Vor dem Weiterleiten der Zelle an ein weiteres Koppelelement der Koppelstruktur wird in den kommunikationssysteminternen Zellkopf anstelle der angegebenen Zeilenindexinformation eine in der koppelelementeindividuellen Routinginformation enthaltene weitere Zeilenindexinformation im Sinne des Ermittelns der Zeile der Rundsendematrix in dem weiteren Koppelelement eingefügt.

Gemäß einer vorteilhaften Ausgestaltung des erfindungsgemäßen Verfahrens wird vor dem Weiterleiten der Zelle an einen einen Ausgang der Koppelstruktur repräsentierenden Ausgang des Koppelelements die in der Rundsendematrix eingetragene und ggf. umgewertete Zellenroutinginformation in die Zelle eingefügt und der kommunikationssysteminterne Zellkopf entfernt - Anspruch 2. Je nach Lage der Koppelstruktur in einem Kommunikationsnetz wird die die Steuerung der Zelle durch das Kommunikationsnetz bewirkende Zellenroutinginformation ggf. mit Hilfe der Koppelstruktursteuerung umgewertet.

Gemäß einer weiteren vorteilhaften Ausgestaltung des erfindungsgemäßen Verfahrens wird eine koppelelementeindividuelle Routinginformation durch eine die Nichtweiterleitung anzeigende Wegeinformation gebildet, sofern die rundzusendende Zelle nicht zu einer durch die Spalte der Rundsendematrix bestimmten Ausgangsleitung des Koppelelementes weitergeleitet werden soll oder durch eine die Weiterleitung der Zelle anzeigende Wegeinformation und eine Zelleindex- oder Zellenroutinginformation gebildet, sofern die rundzusendende Zelle an eine Ausgangsleitung des Koppelelementes übermittelt werden soll - Anspruch 3.

In jedem der Koppelelemente wird nach dem Verifizieren einer in der durch die empfangene Zeilenindexinformation ermittelten Zeile der Rundsendematrix angegebenen koppelelementeindividuellen Routinginformation, die durch eine die Nichtweiterleitung anzeigende Wegeinformation gebildet ist, die zugehörige Zelle nicht an diejenige Ausgangsleitung des Koppelelementes übermittelt, in deren zugeordneter Spalte der Rundsendematrix die koppelelementeindividuelle Routinginformation eingetragen ist. Ist die koppelelementeindividuelle Routinginformation durch eine eine Weiterleitung anzeigende Wegeinformation und durch eine Zeilenindexinformation gebildet, wird die rundzusendende Zelle an die zugeordnete Ausgangsleitung übermittelt, wobei in dem kommunikationssysteminternen Zellkopf anstelle der empfangenen die verifizierte Zeilenindexinformation eingefügt wird. Ist die koppelelementeindividuelle Routinginformation durch eine eine Weiterleitung anzeigende Wegeinformation und eine ggf. umgewertete Zellenroutinginformation gebildet, wird die zugehörige Zelle an die zugeordnete, eine Ausgangsleitung der Koppelstruktur repräsentierende Ausgangsleitung des Koppelelementes übermittelt, wobei der kommunikationssysteminterne Zellkopf entfernt und in den Zellkopf der Zelle anstelle der Zellenroutinginformationen die ggf. umgewerteten Zellenroutinginformationen eingefügt werden - Anspruch 4. Besonders vorteilhaft wird die Verifizierung des kommunikationssysteminternen Zellkopfes von rundzusendenden Zellen und die Vermittlung dieser rundzusendenden Zellen durch eine in jedem Koppelelement implementierte Rundsenderoutine bewirkt - Anspruch 5. Der vorteilhaft durch Programme realisierten Rundsenderoutine ist jeweils die Rundsendematrix zugeordnet.

Im folgenden wird das erfindungsgemäße Verfahren anhand zweier Blockschaltbilder und einer Tabelle näher erläutert. Dabei zeigen
Figur 1 ein Koppelelement einer Koppelstruktur,
Figur 2 den Aufbau einer ATM-Zelle und
Figur 3 eine Rundsendematrix in einem Koppelelement gemäß Figur 1.

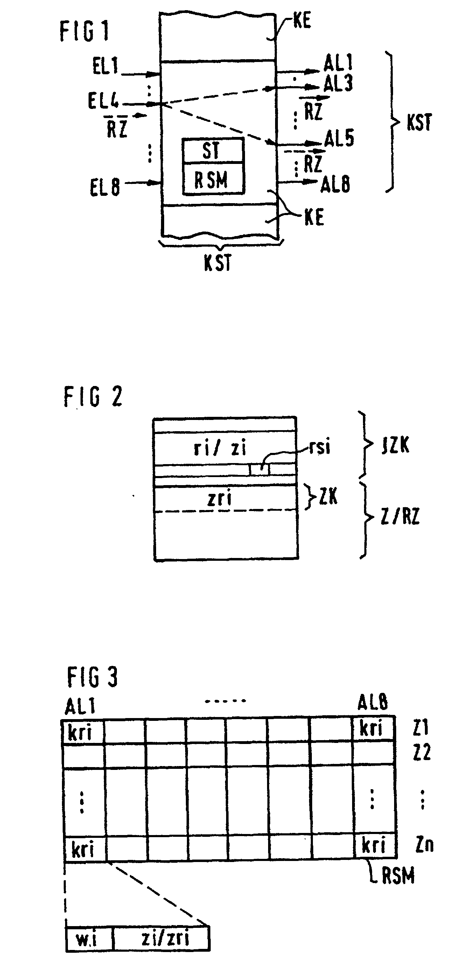

Figur 1 zeigt eines von mehreren Koppelelementen KE einer Koppelstufe KST. Eine nicht dargestellte Koppelstruktur ist für kleine Kommunikationssysteme üblicherweise durch eine Koppelstufe KST und für größere Kommunikationasysteme durch mehrere Koppelstufen KST gebildet. Bei größeren Koppelstrukturen werden die Kommunikationsstufen untereinander vermascht, d.h. Ausgangsleitungen AL1 .. AL8 bzw. Eingangsleitungen EL1 .. EL8 der Koppelelemente KE werden miteinander in vorgegebener Weise verbunden. Für das Ausführungsbeispiel sei weiterhin angenommen, daß das Koppelelement KE zur Vermittlung von im Asynchron-Transfer-Modus (ATM) gebildete Zellen vorgesehen ist. Der prinzipielle Aufbau einer derartigen Zelle Z ist in Figur 2 dargestellt. Die Zelle Z enthält einen Zellkopf ZK, in die Zellenroutinginformationen zri eingefügt sind. Bei diesen Zellenroutinginformationen zri handelt es sich um eine virtuelle Wege- und virtuelle Kanalinformation, mit deren Hilfe die zugehörige Zelle Z durch ein im Asynchron-Transfer-Modus wirkendes Kommunikationsnetz übermittelt wird. Desweiteren ist im Sinne einer Zellenselbststeuerung durch die Koppelstruktur für jede Zelle Z ein mit internen Routinginformationen ri versehener, kommunikationssysteminterner Zellkopf IZK angefügt. Mit Hilfe dieser internen Routinginformationen ri sucht sich die jeweilige Zelle Z den festgelegten Pfad durch eine n-stufige Koppelstruktur selbsteuernd, d.h. ohne Mitwirkung einer zentralen Kommunikationssystemsteuerung. Im kommunikationssysteminternen Zellkopf IZK ist weiterhin ein Bereich für das Eintragen einer Rundsendeinformation rsi vorgesehen. Für das Ausführungsbeispiel sei angenommen, daß eine Rundsendeinformation rsi beispielsweise als eine binäre Information - z.B. 0 - eingetragen ist, wodurch die Zelle Z als rundzusendende Zelle bestimmt ist. Bei rundzusendenden Zellen Z ist anstelle der üblichen internen Routinginformation ri eine Zeilenindexinformation zi in den kommunikationssysteminternen Zellkopf IZK eingefügt.

Desweiteren ist im Koppelelement KE eine Steuerung ST mit einer zugeordneten Rundsendematrix RSM vorgesehen. Die Steuerung ST kann eine separate Steuerung für das jeweilige Koppelelement KE, ein Teil einer Koppelstufensteuerung oder einer Koppelstruktursteuerung darstellen.

Für das Ausführungsbeispiel sei angenommen, daß eine rundzusendende Zelle RZ an der vierten Eingangsleitung EL4 des Koppelelementes KE empfangen wird. Im kommunikationssysteminternen Zellkopf ZK ist neben der Rundsendeinformation rsi eine beispielsweise die zweite Zeile Z2 einer Rundsendematrix RSM anzeigende Zeilenindexinformation zi eingefügt.

Der prinzipielle Aufbau einer jedem Koppelelement KE zugeordneten Rundsendematrix RSM ist in Figur 3 dargestellt. Die Rundsendematrix RSM weist n Zeilen Z1 .. Zn auf, wobei jeder Zeile Z1 .. Zn eine Rundsendeverbindung - virtuelle oder logische Rundsendeverbindung - zugeordnet ist. Aufgrund der in Figur 1 angegebenen acht Ausgangsleitungen der AL1 .. AL8 des Koppelelementes KE weist die Rundsendematrix RSM acht Spalten AL1 .. ALS auf. In jede Spalte AL1 .. AL8 ist für jede Rundsendeverbindung eine koppelelementeindividuelle Routinginformation kri eingetragen. Figur 3 zeigt weiterhin, daß eine koppelelementeindividuelle Routinginformation kri durch eine Wegeinformation wi und durch eine Zeilenindexinformation zi oder durch eine Zellenroutinginformation zri gebildet ist. Die Wegeinformation wi stellt hierbei die wesentliche Routinginformation dar. Durch sie wird angezeigt, ob die jeweilige rundzusendende Zelle RZ an diejenige Ausgangsleitung AL1 .. AL8 weitergeleitet wird, in dessen Spalte die Wegeinformation wi eingetragen ist und sofern Weiterleiten angezeigt wird, ob die jeweilige Ausgangsleitung AL1 .. AL8 die Ausgangsleitung der Koppelstruktur darstellt oder die Ausgangsleitung mit einem weiteren Koppelelement KE verbunden ist. Die Wegeinformation wi wird beispielsweise durch eine zwei Bit umfassende binäre Information 00, 01 oder 10 realisiert. Zeigt die Wegeinformation wi - z.B. 10 - die Weiterleitung der rundzusendenden Zelle RZ an ein weiteres Koppelelement KE an, so wird die nachfolgende in der Rundsendematrix RSM angegebene Zeilenindexinformation zi anstelle der empfangenen Zeilenindexinformation zi in den kommunikationssysteminternen Zellkopf IZK eingefügt und über die jeweilige Ausgangsleitung AL1 .. AL8 übermittelt. Ist aufgrund der angegebenen Wegeinformation wi - z.B. 01 - eine Weiterleitung der rundzusendenden Zelle RZ an eine Ausgangsleitung AL1 .. AL8 vorgesehen, die Ausgangsleitung der Koppelstruktur darstellt, so wird der kommunikationssysteminterne Zellkopf IZK entfernt und die nach der Wegeinformation wi angegebenen Zellenroutinginformationen zri in den Zellkopf ZK der rundzusendenden Zelle RZ eingefügt. Die Zellenroutinginformation zri weicht üblicherweise aufgrund einer kommunikationssysteminternen Umwertung von den ursprünglich im Zellkopf ZK enthaltenen Zellenroutinginformationen zri ab.

Für das Ausführungsbeispiel sei weiterhin angenommen, daß die an der vierten Eingangsleitung EL4 empfangene rundzusendende Zelle RZ aufgrund der in zweiter Zeile Z2 der Rundsendematrix RSM angegebenen koppelelementeindividuellen Routinginformationen kri an die dritte und fünfte Ausgangsleitung AL3, AL5 des Koppelelementes KE vermittelt werden soll. Desweiteren sei angenommen, daß alle Ausgangsleitungen AL1 .. AL8 zu einer weiteren Koppelstufe KST geführt sind. Folglich ist in der dritten und fünften Spalte AL3, AL5 der Rundsendematrix RSM eine die Weiterleitung der rundzusendenden Zelle RZ anzeigende Wegeinformation wi - z.B. 10 - und eine weitere Zeilenindexinformation zi angegeben. Alle weiteren Spalten AL1 .. AL8 der zweiten Zeile Z2 der Rundsendematrix RSM sind mit einer Wegeinformation wi - z.B. 00 - versehen, die das nicht Weiterleiten der rundzusendenden Zelle RZ repräsentiert. Mit Hilfe der Steuerung ST wird die rundzusendende Zelle RZ an die dritte und fünfte Ausgangsleitung AL3, AL5 vermittelt, wobei vorher anstelle der empfangenen Zeilenindexinformation zi die in der Rundsendematrix RSM in der dritten und fünften Spalte AL3, AL5 enthaltenen Zeilenindexinformation zi in den kommunikationssysteminternen Zellkopf IZK eingefügt werden. Durch die aktuell eingefügte Zeilenindexinformation zi ist die Zeile Z1 .. Zn der Rundsendematrix RSM des folgenden Koppelelementes KE bestimmt. In dieser Zeile Z1 .. Zn sind die koppelelementeindividuellen Routinginformationen ri für die Weitervermittlung der rundzusendenden Zelle im folgenden Koppelelement KE gespeichert.

## Patentansprüche

1. Verfahren zum Rundsenden von Zellen in einer im Asynchron-Transfer-Modus wirkenden n-stufigen Koppelstruktur eines Kommunikationssystems, wobei eine Koppelstufe (KST) durch Koppelelemente (KE) gebildet ist,
- bei dem jedem Koppelelement (KE) eine Rundsendematrix (RSM) zugeordnet ist, in deren jeweils eine Rundsendeverbindung repräsentierende Zeilen (Z1 .. Zn) koppelelementindividuelle Routinginformationen (kri) spaltenweise eingetragen werden, wobei die Spalten der Rundsendematrix (RSM) jeweils eine Ausgangsleitung (A1 .. A8) des Koppelelements (KE) repräsentieren,
- bei dem nach Eingang einer rundzusendenden Zelle (RZ) in einem jeweiligen Koppelelement (KE) der Koppelstruktur eine Zeile (Z1 .. Zn) in der Rundsendematrix (RSM) ermittelt wird und in Abhängigkeit von den in der ermittelten Zeile (Z1 .. Zn) angegebenen koppelelementindividuellen Routinginformationen (kri) die Zellen an zumindest eine Ausgangsleitung (AL1 .. AL8) des Koppelelementes (KE) rundgesendet werden,
**dadurch gekennzeichnet,**
- **daß** die koppelelementindividuellen Routinginformationen (kri) mit Hilfe der Koppelstruktursteuerung (ST) ermittelt werden und jeweils durch eine Wegeinformation (wi) und teilweise durch eine Zeilenindex- oder Zellenroutinginformation (zi, zri) gebildet sind,
- **daß** im Sinne einer Zellenselbststeuerung durch die Koppelstruktur mit Hilfe teilnehmersignalisierter Rundsendeursprungs- und Zielinformationen durch eine Koppelstruktursteuerung (ST) vor jeder Zelle ein mit internen Routinginformationen (ri) versehener, kommunikationssysteminterner Zellkopf (IKZ) angefügt wird, wobei bei Rundsendeverbindungen die internen Routinginformationen (ri) durch eine Rundsende- und eine Zeilenindexinformation (rsi, zi) gebildet sind, und
- **daß** nach Eingang einer rundzusendenden Zelle (RZ) in einem jeweiligen Koppelelement (KE) die das Weiterleiten der Zelle festlegende Zeile (Z1 .. Zn) in der Rundsendematrix (RSM) mit Hilfe der angegebenen Zeilenindexinformationen (zi) ermittelt wird, wobei vor dem Weiterleiten der Zelle (RZ) an ein weiteres Koppelelement (KE) der Koppelstruktur in den kommunikationssysteminternen Zellkopf (IKZ) anstelle der angegebenen Zeilenindexinformation (zi) eine in der koppelelementindividuellen Routinginformation (kri), die in der ermittelten Zeile (Z1 .. Zn) angegeben ist, enthaltene weitere Zeilenindexinformation (zi) im Sinne des Ermittlens der Zeile der Rundsendematrix (RSM) in dem weiteren Koppelelement (KE) eingefügt wird.

2. Verfahren nach Anspruch 1,
**dadurch gekennzeichnet,**
**daß** vor dem Weiterleiten der Zelle (RZ) an eine einen Ausgang der Koppelstruktur repräsentierenden Ausgangsleitung (AL1 .. AL8) des Koppelelementes (KE) die in der Rundsendematrix (RSM) eingetragene Zellenroutinginformation (zri) in die Zelle (RZ) eingefügt und der kommunikationssysteminterne Zellkopf (IKZ) entfernt wird.

3. Verfahren nach Anspruch 1 oder 2,
**dadurch gekennzeichnet,**
**daß** die koppelelementindividuelle Routinginformation (kri)
- entweder bei einer Nichtweiterleitung der rundzusendenden Zelle (RZ) zu einer durch die Spalte der Rundsendematrix (RSM) bestimmten Ausgangsleitung (AL1 .. AL8) des Koppelelements (KE) durch eine die Nichtweiterleitung anzeigende Wegeinformation (wi),
- oder bei Weiterleitung der rundzusendenden Zelle (RZ) an eine Ausgangsleitung (AL1 .. AL8) des Koppelelementes (KE) durch eine die entsprechende Weiterleitung der rundzusendenden Zelle (RZ) anzeigende Wegeinformation (wi) und eine Zeilenindex- oder Zellenroutinginformation (zi, zri) gebildet wird.

4. Verfahren nach einem der Ansprüche 1 bis 3,
**dadurch gekennzeichnet,**
**daß** in den Koppelelementen (KE) nach dem Verifizieren einer in der durch die empfangene Zeilenindexinformation (zi) ermittelten Zeile (Z1 .. Zn) der Rundsendematrix (RSM) angegebenen, koppelelementindividuellen Routinginformation (kri),
- die durch eine die Nichtweiterleitung anzeigende Wegeinformation (wi) gebildet ist, die rundzusendende Zelle (RZ) nicht an diejenige Ausgangsleitung (AL1 .. AL8) des Koppelelementes (KE) übermittelt wird, in deren zugeordneter Spalte der Rundsendematrix (RSM) die koppelelementindividuelle Routinginformation (kri) eingetragen ist,
- oder die durch eine eine Weiterleitung anzeigende Wegeinformation (wi) und durch eine Zeilenindexinformation (zi) gebildet ist, die rundzusendende Zelle (RZ) an die zugeordnete Ausgangsleitung (AL1 .. AL8) übermittelt wird, wobei in den kommunikationssysteminternen Zellkopf (IKZ) anstelle der empfangenen die verifizierte Zeilenindexinformation (zi) eingefügt ist,
- oder die durch eine eine Weiterleitung anzeigende Wegeinformation (wi) und eine gegebenenfalls umgewertete Zellenroutinginformation (rzi) gebildet ist, die zugehörige rundzusendende Zelle (RZ) an die zugeordnete, einen Ausgang der Koppelstruktur repräsentierende Ausgangsleitung (AL1 .. AL8) des Koppelelementes (KE) übermittelt wird, wobei der kommunikationssysteminterne Zellkopf (IKZ) entfernt und in den Zellkopf (ZK) der rundzusendenden Zelle (RZ) anstelle der Zellenroutinginformationen (zri) die gegebenenfalls umgewerteten Zellenroutinginformationen (zri) eingefügt werden.

5. Verfahren nach einem der Ansprüche 1 bis 5,
**dadurch gekennzeichnet,**
**daß** für die Verifizierung des kommunikationssysteminternen Zellkopfes (IKZ) von rundzusendenden Zellen (RZ) und die Vermittlung der rundzusendenden Zellen (RZ) in jedem Koppelelement (KE) eine Rundsenderoutine vorgesehen ist.

## Claims

1. Method for broadcasting cells in an n-stage switching structure, acting in asynchronous transfer mode, in a communications system, where a switching stage (KST) is formed by switching elements (KE),
- in which each switching element (KE) has an associated broadcasting matrix (RSM) whose rows (Z1 .. Zn) respectively representing a broadcasting connection have switching-element-specific routing information (kri) entered into them in columns, the columns of the broadcasting matrix (RSM) respectively representing an output line (A1 .. A8) of the switching element (KE).
- in which, following receipt of a cell (RZ) to be broadcast in a respective switching element (KE) of the switching structure, a row (Z1 .. Zn) of the broadcasting matrix (RSM) is ascertained and, on the basis of the switching-element-specific routing information (kri) indicated in the ascertained row (Z1 .. Zn), the cells are broadcast to at least one output line (AL1 .. AL8) of the switching element (KE),
**characterized**
- **in that** the switching-element-specific routing information (kri) is ascertained using the switching structure controller (ST) and is formed in each case by a path information item (wi) and in some cases by a row-index or cell-routing information item (zi, zri),
- **in that**, for the purpose of cell self-routing through the switching structure using subscriber-signalled broadcasting-origin and destination information, a switching-structure controller (ST) appends to the front of every cell a communication-system-internal cell header (IKZ) provided with internal routing information (ri), the internal routing information (ri) for broadcasting connections being formed by a broadcasting information item and a row-index information item (rsi, zi), and
- **in that**, following receipt of a cell (RZ) to be broadcast in a respective switching element (KE), the row (Z1 .. Zn) of the broadcasting matrix (RSM) which stipulates the forwarding of the cell is ascertained using the specified row-index information (zi), and, before the cell (RZ) is forwarded to another switching element (KE) of the switching structure, a further row-index information item (zi), which is contained in the switching-element-specific routing information item (kri) specified in the ascertained row (Z1 .. Zn), is inserted into the communications-system-internal cell header (IKZ) instead of the specified row-index information item (zi) for the purpose of ascertaining the row of the broadcasting matrix (RSM) in the further switching element (KE).

2. Method according to Claim 1,
**characterized**
**in that**, before the cell (RZ) is forwarded to an output line (AL1 .. AL8), representing an output of the switching structure, of the switching element (KE), the cell-routing information item (zri) entered in the broadcasting matrix (RSM) is inserted into the cell (RZ), and the communications-system-internal cell header (IKZ) is removed.

3. Method according to Claim 1 or 2,
**characterized**
**in that** the switching-element-specific routing information item (kri) is formed
- either by a path information item (wi) indicating that there has been no forwarding, in the event of the cell (RZ) to be broadcast not being forwarded to an output line (AL1 .. AL8), determined by the column in the broadcasting matrix (RSM), of the switching element (KE),
- or by a path information item (wi), indicating that the cell (RZ) to be broadcast has been forwarded as appropriate, and a row-index or cell-routing information item (zi, zri), in the event of the cell (RZ) to be broadcast being forwarded to an output line (AL1 .. AL8) of the switching element (KE).

4. Method according to one of Claims 1 to 3,
**characterized**
**in that**, in the switching elements (KE), following verification of a switching-element-specific routing information item (kri) which is specified in the row (Z1 .. Zn) of the broadcasting matrix (RSM) ascertained by the received row-index information item (zi) and
- which is formed by a path information item (wi) indicating that there has been no forwarding, the cell (RZ) to be broadcast is not transmitted to that output line (AL1 .. AL8) of the switching element (KE) whose associated column in the broadcasting matrix (RSM) contains the switching-element-specific routing information item (kri),
- or which is formed by a path information item (wi) indicating forwarding and by a row-index information item (zi), the cell (RZ) to be broadcast is transmitted to the associated output line (AL1 .. AL8), the verified row-index information item (zi) having been inserted into the communications-system-internal cell header (IKZ) instead of the received one,
- or which is formed by a path information item (wi) indicating forwarding and by a possibly reassessed cell-routing information item (rzi), the appertaining cell (RZ) to be broadcast is transmitted to the associated output line (AL1 .. AL8), representing an output of the switching structure, of the switching element (KE), the communications-system-internal cell header (IKZ) being removed and the possibly reassessed cell-routing information (zri) being inserted into the cell header (ZK) of the cell (RZ) to be broadcast instead of the cell-routing information (zri).

5. Method according to one of Claims 1 to 4,
**characterized**
**in that** each switching element (KE) contains a broadcasting routine for verifying the communications-system-internal cell header (IKZ) of cells (RZ) to be broadcast and for switching the cells (RZ) to be broadcast.

## Revendications

1. Procédé pour diffuser des cellules dans une structure de commutation fonctionnant en mode de transfert asynchrone à n niveaux d'un système de communication, un niveau de commutation (KST) étant formé par des éléments de commutation (KE),
- dans lequel à chaque élément de commutation (KE) est assignée une matrice de diffusion (RSM) dans les lignes (Z1 ... Zn) de laquelle sont introduites, sous forme de colonnes, des informations de routage (kri) individuelles pour éléments de commutation, les lignes représentant chacune une connexion pour diffusion et les colonnes de la matrice de diffusion (RSM) représentant chacune une ligne de sortie (A1 ... A8) de l'élément de commutation (KE),
- dans lequel est repérée, après l'entrée d'une cellule à diffuser (RZ) dans un élément de commutation (KE) de la structure de commutation, une ligne (Z1 ... Zn) de la matrice de diffusion (RSM) et dans lequel les cellules sont diffusées à au moins une ligne de sortie (AL1 ... AL8) de l'élément de commutation (KE) en fonction des informations de routage (kri) individuelles pour éléments de commutation indiquées dans la ligne repérée (Z1 ... Zn),
**caractérisé en ce que**
- les informations de routage (kri) individuelles pour éléments de commutation sont établies à l'aide de la commande de la structure de commutation (ST) et sont constituées dans chaque cas par une information de chemin (wi) et, en partie, par une information d'index de ligne ou une information de routage de cellule (zi, zri),
- aux fins de l'autoguidage de la cellule à travers la structure de commutation à l'aide d'informations d'origine et de destination relatives à la diffusion et signalées par les abonnés, un en-tête de cellule (IKZ) interne au système de communication et porteur d'informations de routage internes (ri) est adjoint en tête de chaque cellule par une commande de la structure de commutation (ST), les informations de routage internes (ri) étant, dans le cas de connexions pour diffusion, constituées par une information de diffusion et une information d'index de ligne (rsi, zi) et
- après l'entrée d'une cellule à diffuser (RZ) dans un élément de commutation (KE), la ligne (Z1 ... Zn) déterminant l'acheminement de la cellule est repérée dans la matrice de diffusion (RSM) à l'aide des informations d'index de ligne (zi) indiquées, étant entendu que, avant l'acheminement de la cellule (RZ) à un autre élément de commutation (KE) de la structure de commutation, une autre information d'index de ligne (zi) contenue dans l'information de routage (kri) individuelle pour éléments de commutation, indiquée dans la ligne (Z1 ... Zn) repérée, est insérée, à la place de l'information d'index de ligne (zi) indiquée, dans l'en-tête de cellule (IKZ) interne au système de communication aux fins de repérer la ligne de la matrice de diffusion (RSM) dans l'élément de commutation (KE) suivant.

2. Procédé selon la revendication 1,
**caractérisé en ce que**
avant l'acheminement de la cellule (RZ) à une ligne de sortie (AL1 ... AL8) de l'élément de commutation (KE) représentant une sortie de la structure de commutation, l'information de routage de cellule (zri) introduite dans la matrice de diffusion (RSM) est insérée dans la cellule (RZ) et **en ce que** l'entête de cellule (IZK) interne au système de communication est éliminé.

3. Procédé selon la revendication 1 ou 2,
**caractérisé en ce que**
l'information de routage individuelle (kri) pour éléments de commutation est constituée
- soit par une information de chemin (wi) indiquant le non-acheminement dans la mesure où il s'agit de ne pas acheminer la cellule à diffuser (RZ) à une ligne de sortie (AL1 ... AL8) de l'élément de commutation (KE) définie par la colonne de la matrice de diffusion (RSM)
- soit par une information de chemin (wi) indiquant l'acheminement de la cellule à diffuser (RZ) et une information d'index de ligne ou de routage de cellule (zi, zri), dans la mesure où il s'agit d'acheminer la cellule à diffuser (RZ) à une ligne de sortie (AL1 ... AL8) de l'élément de commutation (KE).

4. Procédé selon l'une des revendications 1 à 3,
**caractérisé en ce que**
dans les éléments de commutation (KE), après la vérification d'une information de routage individuelle (kri) pour éléments de commutation indiquée dans la ligne (Z1 ... Zn) de la matrice de diffusion (RSM) repérée par l'information d'index de ligne reçue (zi),
- ladite information étant constituée par une information de chemin (wi) indiquant le non-acheminement, la cellule à diffuser (RZ) n'est pas transmise à la ligne de sortie (AL1 ... AL8) de l'élément de commutation (KE) à laquelle est assignée la colonne de la matrice de diffusion (RSM) dans laquelle l'information de routage (kri) individuelle pour éléments de commutation est introduite,
- ou, ladite information étant constituée par une information de chemin (wi) indiquant un acheminement et une information d'index de ligne (zi), la cellule à diffuser (RZ) est transmise à la ligne de sortie (AL1 ... AL8) correspondante, l'information d'index de ligne (zi) vérifiée étant insérée dans l'en-tête de cellule (IKZ) interne au système de communication à la place de celle qui a été reçue
- ou, ladite information étant constituée par une information de chemin (wi) indiquant un acheminement et une information de routage de cellule (rzi) qui a éventuellement été traduite, la cellule correspondante à diffuser (RZ) est transmise à la ligne de sortie (AL1 ... AL8) de l'élément de commutation (KE) correspondante représentant une sortie de la structure de commutation, l'en-tête de cellule (IKZ) inteme au système de communication étant éliminé et les informations de routage de cellule (zri), éventuellement traduites, étant insérées dans l'en-tête de cellule (ZK) de la cellule à diffuser (RZ) à la place des informations de routage de cellule (zri).

5. Procédé selon l'une des revendications 1 à 5,
**caractérisé en ce que**
pour la vérification de l'en-tête de cellule (IKZ) de cellules à diffuser (RZ), interne au système de communication, et pour la transmission des cellules à diffuser (RZ) est prévue, dans chaque élément de commutation (KE), une routine de diffusion.
